# EUROPEAN PATENT SPECIFICATION

(11) **EP 2 855 110 B1**
(45) Date of publication and mention of the grant of the patent: **02.05.2018**
(21) Application number: 13729043.3
(22) Date of filing: 17.05.2013
(51) Int. Cl.: B28B 13/02, B28B 5/04, B29C 31/04, B29C 33/00, C04B 26/14, C04B 26/18, B29C 67/24

(54) **METHOD OF MANUFACTURING A SURFACE APPARATUS AND APPARATUS THEREFORE**
VERFAHREN ZUR HERSTELLUNG EINER OBERFLÄCHENVORRICHTUNG
PROCÉDÉ DE FABRICATION D'UN APPAREIL DE SURFACE

(30) Priority: 24.05.2012 GB 201209133; 24.05.2012 US 201261651247 P
(43) Date of publication of application: 08.04.2015
(73) Proprietor: Glasseco LLC, Miami, Florida 33138 (US)
(72) Inventor: CRAWLEY, Donald Denis, Brighton Sussex BN1 6EL (GB)
(74) Representative: Secerna LLP
(86) International application number: PCT/GB2013/051290
(87) International publication number: WO 2013/175185

(56) References cited:
- EP-A1- 0 290 953
- DE-A1- 2 351 758
- DE-B- 1 024 429
- US-A- 3 344 011
- US-A1- 2008 236 092

## Description

### Technical Field

Certain embodiments of the present invention relate to a method for the manufacture of an apparatus that provides a surface, e.g. a panel. In particular, but not exclusively, certain embodiments of the present invention relate, at least in part, to a method of manufacturing an apparatus which comprises a resin component and at least one aggregate component. Methods disclosed herein can be used in the manufacture of apparatus for providing a surface which comprise a reduced level of air inclusions. The methods disclosed herein are used to manufacture apparatus for example countertops e.g. for use in kitchens, worktops, desktops, bathroom furniture such as sinks and shower trays, as well as flooring surfaces and the like.

### Background to the Invention

The use of resin and aggregate components is commonplace to form a wide variety of composites which provide hard-wearing surfaces. For example, resin-bonded aggregate material is used to produce paving and flooring. In addition, surfaces such as countertops e.g. for use in kitchens, worktops and desktops are often manufactured from a resin-aggregate composite material. The apparatus is hard wearing, low maintenance and has a high scratch/ impact resistance. A large range of aggregate components may be used, depending on the intended use and/or the desired look of the apparatus. For example, glass chips, marble chips, concrete, granite and the like have all been used to form surface apparatus such as floors, desktops and countertops.

Terrazzo surfacing is one example of a surfacing apparatus which includes a binder and an aggregate component. Terrazzo is a composite material which is poured in place or into a mold and is typically used as flooring, work surfaces and wall surfaces. Terrazzo surfaces are characterized by exposed marble or other aggregate chips or pieces set in a cementitious, polymer or resin matrix. Terrazzo can be highly decorative with different coloured aggregate being used to form the flooring or other surface type to form a custommade surface. Custom surfaces can be made using different types of fill and aggregate and metal dividers and can depict different patterns or scenes such as landscapes.

A variety of different binders or resins can be used in the preparation of terrazzo flooring or panels. Some prior art surfacing methods use cement based resin as a binder. Other methods use epoxy resins which are considered to be advantageous since they are available in a wide variety of colours, cure faster thus allowing faster installation, offer increased strength and durability and are generally impermeable unlike cement based resins.

US Patent No. 6770328 discloses a prior art method of making a terrazzo surface from recycled glass. The method disclosed in US Patent No. 6770328 involves mixing together crushed recycled glass, epoxy resin and epoxy primer and then applying a layer of the mixture to a floor surface or mold. The mixture is then spread using a trowel and cured. Following curing, the surface is then smoothed by grinding. An epoxy grout is then applied to the surface to fill air bubbles that are present on the top surface following grinding. The method of US6770328 describes mixing the aggregate, resin and curing agent in a single step. In addition, the method does not include vibrating the mixture.

US 2008/0236092 A1 discloses a method of manufacturing terrazzo tiles, wherein a resin, curing agent, filler and pigment are poured into a mould. Stone chips are then poured into the mould to settle at the bottom of the mould.

US 3 344 011 discloses a method of manufacturing terrazzo tiles, wherein a resin mixture of epoxy, hardener and fine particle size aggregate is first deposited into a shell. The shell is then vibrated, after which marble chip aggregate is spread to the surface and the shell is again vibrated.

Prior art methods of producing resin-aggregate composite apparatus can be labour-intensive and result in the inclusion of air bubbles in the resulting surface. The air bubbles can result in weakness in the apparatus. In addition, air inclusions allow bacteria to cultivate in the pores and also retain dirt. This can be unhygienic especially if the surface is used in kitchens for example. The look of the apparatus can also be spoilt by retention of dirt in the air inclusions.

### Summary of the Invention

It is an aim of the present invention to at least partly mitigate the above-mentioned problems associated with the prior art by using a method according to claim 1. Certain embodiments of the present invention comprise methods which result in resin-aggregate composite apparatus which comprise a reduced number of air inclusions therein. In addition, certain embodiments of the present invention provide a method which results in less wear on the tooling equipment used to produce the surface apparatus described herein.

Certain embodiments provide methods which produce apparatus e.g. panels for use as worktops and the like which are less than about 15mm in thickness. For example, the apparatus may be from about 5 to 15 mm in thickness. Also included in certain embodiments are surface apparatus which are less than 15mm in thickness.

The reduction in thickness of the apparatus may enable the apparatus to be used as a surface apparatus in a multilayer apparatus. For example, a resin-aggregate component apparatus as described herein may be provided as a top layer in a multi-layered product wherein one or more lower layers are formed from other materials. In one embodiment, there is provided a layered apparatus comprising the surface apparatus as described herein and a second layer, wherein the second layer is not the surface apparatus of the present invention. In one embodiment, the second layer may be formed from chipboard, wood or the like.

Certain embodiments provide an apparatus for providing a surface produced by the methods disclosed herein. The apparatus may have fewer pores created by air inclusion and therefore fewer areas for bacteria to cultivate in and/or retain dirt.

Certain embodiments provide an assembly for use in the method of the invention. Certain embodiments of the present invention provide methods by which it is easier to define patterns and inlay material in an apparatus for providing a surface.

Certain embodiments of the present invention comprise methods which reduce the time required to manufacture resin-aggregate composite apparatus.

Certain embodiments provide methods which can be used to produce resin-aggregate composite apparatus in a large number of different forms e.g. floor panels, shower enclosures, bath panels, countertops and worktops.

Certain embodiments provide a method and/ or an assembly which enables surface apparatus to be produced which have a thickness of approximately 6mm. Prior art methods typically cannot produce surface apparatus of less than about 12mm in thickness, due at least in part to the number of air inclusions introduced into the apparatus during manufacture.

In a first aspect of the present invention, there is provided a method of manufacturing an apparatus that provides a surface and which comprises a resin component and an aggregate component according to claim 1. As used herein, the term "a resin/ curing agent/ first aggregate component mixture" is interchangeable with the term "a mixture comprising a resin, a curing agent and a first aggregate component". It will be understood that the resin component will be an activated resin component when mixed with a suitable curing agent.

Aptly, the first aggregate component sinks to the bottom of the enclosure as the enclosure is vibrated in the further vibration mode. Aptly, therefore, the resin/ curing agent/ first aggregate component mixture contains the first aggregate component situated at the bottom of the enclosure. Aptly, the apparatus is a panel.

Aptly, the further vibration mode comprises a greater amplification and/or frequency than the first vibration mode. Aptly, the further vibration mode has a greater amplitude than the first vibration mode. Aptly, the further vibration mode comprises a higher frequency than the first vibration mode.

In one embodiment, the method comprises mixing the resin component and the curing agent together to form an activated resin component prior to pouring into the enclosure. Aptly, the first aggregate component is added to the enclosure separately and subsequent to the activated resin component being added. Aptly, the enclosure is vibrated in the first vibration mode for at least 1, 2, 3, 4, 5, 6, 7, 8, 9, 10 or more minutes before the first aggregate component is added.

Aptly, the resin/curing agent mixture is a liquid. Further details of the resin component and the curing agent are provided below. According to the invention, the step of applying the further vibration mode comprises encouraging air to be released from an upper surface of the resin component / curing agent/ first aggregate component mixture.
Aptly, the method further comprises: adding a second aggregate component to the enclosure to form a mixture comprising a first aggregate component, a second aggregate component, a resin component and a curing agent, wherein optionally the second aggregate component has a lower average weight than the first aggregate component. That is to say, aptly, individual aggregate elements of the first aggregate component are heavier than individual aggregate elements of the second aggregate component.
In one embodiment, the second aggregate component has a smaller mass than the first aggregate component. In one embodiment, the first aggregate component has a greater density than the second aggregate component.
Aptly, the step of vibrating the enclosure in a further vibration mode is carried out prior to or simultaneously with the step of adding a first aggregate component to the enclosure. Following the addition of the first aggregate component, the further vibration mode agitates the resin component, curing agent and aggregate component to form a mixture. In one embodiment, the first vibration mode and the further vibration mode differ in frequency and/or amplitude. In an embodiment, the first vibration mode and the further vibration mode have substantially the same frequency and/or amplitude.

In one embodiment, the first vibration mode has a frequency of vibration of between about 20Hz to about 42Hz e.g. 20, 25, 30, 35, 40 or 42 Hz. In one embodiment, the first vibration mode has a frequency of vibration of about 25Hz. In one embodiment, the method comprises applying the first vibration mode for between about 1 minute and 10 minutes e.g. about 1, 2, 3, 4, 5, 6, 7, 8, 9, or 10 minutes. Alternatively, the method comprises applying the first vibration mode for more than 10 minutes or less than one minute.

In one embodiment, the first vibration mode has an amplitude of vibration of e.g. 0.1g, 0.2g, 0.3g or 0.4g.

In one embodiment, the method comprises applying the further vibration mode for between about 1 minute and 10 minutes e.g. about 1, 2, 3, 4, 5, 6, 7, 8, 9, or 10 minutes. Alternatively, the method comprises applying the further vibration mode for more than 10 minutes or less than one minute. In one embodiment, the further vibration mode has a frequency of vibration of between about 25Hz to about 50Hz or greater e.g. 25, 30, 35, 40, 42, 45 or 50 Hz or more. Aptly, the further vibration mode has an amplitude of vibration of from about 0.6 to 1.4g.

Aptly, the method comprises adding further aggregate components to the enclosure, wherein optionally each subsequent aggregate component weighs less than each aggregate component previously added. That is to say, aptly, individual elements of each subsequent aggregate component weigh less on average than individual elements of each aggregate component previously added. Aptly, the method comprises adding a third aggregate component to the enclosure. Aptly, the third aggregate component is added subsequent to the first and second aggregate component. Aptly, the enclosure is vibrated prior to, during and following addition of the third aggregate component.

Aptly, the first aggregate, the second aggregate component and further aggregate component, e.g. the third aggregate component, are added to the enclosure at substantially the same time. Aptly, following addition of the first aggregate component and at least one further aggregate component to the enclosure, the enclosure is vibrated for a predetermined length of time e.g. between about 1 minutes to about 10 minutes or more.

Aptly, the method comprises positioning the enclosure containing the resin component and the curing agent below an aggregate container. In one embodiment, the method comprises loading the aggregate container with the first aggregate component and optionally at least one further aggregate component.

Aptly, the method further comprises the step of re-directing a vertical falling motion of the aggregate component(s) released from the container via at least one mesh layer located between the aggregate component(s) loaded in the aggregate container and the enclosure.

Aptly, the method further comprises the step of deflecting falling aggregate component(s) in a transverse direction with respect to a vertical downward direction, via struts of a lower mesh layer having openings offset with respect to openings of an adjacent mesh layer.

Aptly, the aggregate container comprises at least one mesh layer. Aptly, the aggregate container comprises a plurality of mesh layers. Aptly, the aggregate container comprises a bottom region and a plurality of elongate parallel panels extending across a width of the bottom region, wherein the elongate parallel panels are rotatable from an open position in which edges of the panels are spaced apart and a closed position in which edges of adjacent panels at least partially overlap.

Aptly, the aggregate container is loaded with the first aggregate component, and optionally the further aggregate component(s), when the panels are in a closed position. In one embodiment, the panels are rotated from the closed position to the open position to release the aggregate component(s) from the container.

In one embodiment, the method further comprises the step of re-directing a vertical downwards falling motion of aggregate component released from the container by locating a region of an upper surface of each panel between the container and the enclosure in the open position. In one embodiment, the method further comprises the step of releasing the aggregate component substantially simultaneously across an entire area of a bottom region of the container by rotating the panels in common by the same angle of rotation.

In one embodiment, the method further comprises the step of imparting a transverse component into the falling motion of aggregate component by deflecting the aggregate component with the upper surface of the panels. In one embodiment, the method further comprises the step of re-directing a vertical falling motion of the aggregate component released from the container via at least one mesh layer located between the panels and the enclosure.

In one embodiment, the method further comprises the step of deflecting falling aggregate component(s) in a transverse direction with respect to a vertical downward direction, via struts of a lower mesh layer having openings offset with respect to openings of an adjacent mesh layer. Aptly, the method comprises vibrating the container during the step of deflecting the falling aggregate component(s).

Aptly, the method comprises providing a layer of activated resin component on an upper surface of the mixture in the enclosure, wherein the mixture comprises the first aggregate component, the further e.g. the second aggregate component, the resin component and the curing agent.

Aptly, the method comprises levelling a top surface of the aggregate, resin component and curing agent mixture. In one embodiment, the method comprises vibrating the enclosure in a third vibration mode during the step of levelling.

In one embodiment, the third vibration mode has a frequency of vibration of from about 25 to about 45Hz, e.g. 25, 30, 35, 40, 42 or 45 Hz. Aptly, the third vibration mode has a frequency of vibration of up to about 42 Hz. Aptly, the third vibration mode has an amplitude of vibration of from about 0.6 to 1.4g.

Aptly, the method further comprises curing the aggregate component, resin and curing agent mixture in the enclosure mixture to form the apparatus.

In one embodiment, the method comprises curing at ambient temperature e.g. at a temperature of between about 17 to 25 °C. In one embodiment, the method comprises curing at a temperature of between about 10°C to about 35°C. In one embodiment, the method comprises forming a curved apparatus and the curing is at a temperature of approximately 10°C. Aptly, the method further comprises heating and shaping the cured mixture to form the apparatus.

Aptly, the method comprises applying vibration to the enclosure. Aptly, the enclosure is positioned on a table which is capable of vibrating. Certain vibrating tables are known in the art. In one embodiment, the table is capable of varying the frequency and/or amplitude of the vibration. Aptly, the table is capable of varying the centrifugal force from e.g. about 2.48kN to about 1.98kN. In one embodiment, the centrifugal force is between about 1.98kN to about 2.98kN. Aptly the table is comprised within an assembly as described herein. Aptly, the range of amplitude and/or frequency is determined by a user via a controller connected to the table.
Aptly, a top of the table top sits on spring isolators with vibrating motors suspended from the bottom of the table top. Aptly, the motors are connected to electronic invertors and/or one or more phase inverters to change the frequency and force as required.

Aptly, the first aggregate component is selected from glass chips, stone chips, engineered stone chips, shells, plastic chips, gold leaf and rare material chips such as rare glass chips, mirror chips and metal chips. In one embodiment, the first aggregate component is a recycled material.

Aptly, the further aggregate component e.g. the second aggregate component is selected from glass chips, stone chips, engineered stone chips, shells, plastic chips, mirror chips, metal chips, gold leaf and rare material chips such as rare glass chips. In one embodiment, the further e.g. second aggregate component is a recycled material.

In another embodiment, there is provided an apparatus for providing a surface obtainable by the method of the present invention. Aptly, the apparatus e.g. surface apparatus comprises fewer air inclusions as compared to an apparatus obtainable from methods which comprise mixing a resin, a curing agent and an aggregate at substantially the same time. Aptly, the apparatus comprises between about 50% and 90% less air inclusions e.g. surface air inclusions than apparatus made from prior art methods.

In another embodiment, there is provided an apparatus for providing a surface comprising an aggregate component and a cured resin component, wherein the apparatus has a thickness of less than about 10mm.
In one embodiment, the apparatus is a panel. In one embodiment, the apparatus is one of a countertop, a worktop, a table top, a desk top, a wall panel, a shower tray, a shower screen or a floor or the like. Aptly, the panel is translucent. Aptly, the panel is curved. In one embodiment, the apparatus is a countertop or a worktop.
Aptly, the apparatus has a thickness of approximately 6mm. Aptly, the apparatus comprises approximately 50% to 90% less surface air inclusions than a panel obtainable by prior art methods.
Aptly, the aggregate component comprises glass chips, wherein optionally the glass chips are formed from recycled glass.

In a further aspect there is provided a multi-layered apparatus comprising the apparatus of certain embodiments of the present invention, wherein the apparatus forms a first layer thereof. Aptly, the multi-layered apparatus comprises a second layer, wherein the second layer is formed from a material which differs from the first layer. In one embodiment, the second layer is formed from a material selected from wood, concrete and chipboard.

In a further aspect, there is provided an assembly, e.g. an apparatus, for manufacturing an apparatus that provides a surface e.g. a panel and which comprises a resin component and an aggregate component, the assembly comprising:
an aggregate container for storing an aggregate component;
a support for supporting an enclosure containing an activated resin component below the aggregate container; and
a plurality of elongate parallel panels at a bottom region of the aggregate container; wherein
each panel is selectively rotatable about a respective longitudinal axis from a closed position in which edges of adjacent panels at least partially overlap, to an open position in which edges of the panels are spaced apart to allow an aggregate component to fall from the aggregate container.

Aptly, the assembly further comprises, in the open position, the panels are rotated to locate a region of an upper surface of each panel at least partially in a pathway of aggregate component(s) falling from the container. Aptly, the assembly further comprises at least one mesh layer located between the panels and the support. Aptly, the at least one mesh layer comprises a plurality of spaced apart, substantially parallel, mesh layers each comprising a plurality of openings wherein openings in a mesh layer are offset with respect to openings in an adjacent mesh layer.

In a further aspect, there is provided an assembly e.g. an apparatus, for manufacturing an apparatus that provides a surface e.g. a panel and which comprises a resin component and an aggregate component, the assembly comprising:
an aggregate container for storing aggregate component;
a support for supporting an enclosure containing a activated resin component below the aggregate container; and
at least one mesh layer at a bottom region of the aggregate container.

Aptly, the aggregate container is movably supported on a pair of substantially parallel rails. Aptly, the at least one mesh layer comprises a plurality of spaced apart, substantially parallel, mesh layers each comprising a plurality of openings wherein openings in a mesh layer are offset with respect to openings in an adjacent mesh layer. Aptly, the assembly comprises at least one motor for vibrating the aggregate container. Aptly, the assembly comprises at least one motor for vibrating the support. Aptly, the motors are connected to one or more electronic or phase invertors to change the frequency and/or force as required. In one embodiment, the assembly further comprises at least one further support for supporting the enclosure. Aptly, the at least one further support comprises at least one transfer element. Aptly, the at least one transfer element comprises a roller.

In one embodiment, the at least one further support comprises at least one securing element for releasably securing the mold to an upper surface of the support. Aptly, the at least one securing element comprises a vacuum clamp. Aptly, the at least one further support comprises a motor for vibrating the support.

In a further aspect, there is provided a method of manufacturing an apparatus that provides a surface and which comprises a resin component and an aggregate component, comprising the steps of: providing an enclosure containing a resin component below an aggregate container; and releasing an aggregate component at a bottom region of the container by rotating a plurality of elongate parallel panels from a closed position in which edges of adjacent panels at least partially overlap to an open position in which edges of the panels are spaced apart.
Aptly, the method comprises the step of: re-directing a vertical downwards falling motion of aggregate component released from the container by locating a region of an upper surface of each panel between the container and the enclosure in the open position.

Aptly the method further comprises the step of: re-directing a vertical falling motion of aggregate component released from the container via at least one mesh layer located between the panels and the enclosure.
Aptly, the method further comprises the step of: deflecting falling aggregate component in a transverse direction with respect to a vertical downward direction, via struts of a lower mesh layer having openings offset with respect to openings of an adjacent mesh layer.
Aptly, the method further comprises the step of: releasing the aggregate component substantially simultaneously across an entire area of a bottom region of the container by rotating the panels in common by the same angle of rotation.
Aptly, the method further comprises the step of: imparting a transverse component into the falling motion of aggregate component by deflecting the aggregate component with the upper surface of the panels. Embodiments of the present invention include the use of a resin component. Aptly, the resin component is a liquid resin component i.e. liquid at ambient temperature prior to being mixed with a curing agent and cured.
In one embodiment, the resin component comprises an epoxy resin. Epoxy resins contain a reactive oxirane structure which is referred to as an "epoxy" functionality. There are a large number of epoxy resins which may be suitable for use in embodiments of the present invention.
Aptly, the epoxy resin component comprises a compound selected from the group consisting of Bis phenol A, Bis phenol F, Novolac and hydrogenated Bis phenol A or derivatives thereof. Aptly, the epoxy resin comprises a bisphenol A based epoxy resin.
Aptly, the resin component is substantially solvent free. In one embodiment, the epoxy resin component is colourless. Aptly, the epoxy resin component is coloured. In one embodiment, the resin component is ketone solvent free. In one embodiment, the resin component comprises an alcohol solvent.
Suitable epoxy resins are manufactured by the Dow Chemical Company and sold under the D.E.R trade name which covers a number of different epoxy resins.
Other suitable epoxy resins are manufactured by Momentive and sold under the trade name EPON™. In one embodiment, the epoxy resin component comprises EPON™ Resin 825, which is a high purity bisphenol A epichlorohydrin epoxy resin. In one embodiment, the epoxy resin component comprises a difunctional bisphenol A/epichlorohydrin derived liquid epoxy resin. In one embodiment, the resin component comprises EPIKOTE 240.
Aptly, the epoxy resin component comprises EPON™ Resin 8132 which is a 100% reactive low viscosity liquid bisphenol-A based epoxy resin diluted with an alkyl glycidyl ether. Aptly the epoxy resin component comprises epoxy resin UKR137.
Aptly, the resin component comprises more than one epoxy resin e.g. two or more epoxy resins.

Aptly, the resin component comprises an epoxy resin e.g. an epoxy resin described herein, in an amount of between about 65 wt% and about 100 wt.%. Aptly, the resin component comprises the epoxy resin in an amount of about 65 wt.%, 70 wt.%, 75 wt.%, 80 wt.%, 85 wt.%, 90 wt.%, 95 wt.%, 96, 97, 98, 99 or 100 wt.%. Aptly, a suitable amount of resin in a resin component is determined based on desired physical properties such as viscosity, hardness and tensile strength etc.

In an embodiment, the resin component comprises a formulated blend of an epoxy resin and at least one other component. Aptly, the resin is diluted. Suitable diluents may be monofunctional or multifunctional. Aptly, the at least one other component comprises a reactive diluent. Suitable diluents may include, but are not limited to, a glycidyl ether e.g. C₁₂-C₁₄ aliphatic glycidyl ether. Reactive diluents are typically used to reduce viscosity. Aptly, the resin component comprises a resin modifier. Resin modifiers may be used to improve mechanical and thermal shock resistance, increase elongation and obtain higher impact strength and flexibility. Examples of resin modifiers include e.g. aliphatic diepoxides and monofunctional epoxide compounds.

In one embodiment, the resin component comprises a polyester resin. Aptly, the resin component comprises a polyester resin between about 75 wt.% and about 100 wt.% of a polyester resin. Aptly, the resin component comprises the polyester resin in an amount of about 65 wt.%, 70 wt.%, 75 wt.%, 80 wt.%, 85 wt.%, 90 wt.%, 95 wt.% or 100 wt.%.

In one embodiment, the resin component comprises a coloured pigment. Aptly, the resin component may comprise a filler e.g. alumina, silica, powered glass and the like.

Aptly, the resin component comprises a UV stabiliser. In one embodiment, the resin component comprises a bactericide e.g. a bactericide produced by SteriTouch®

Aptly, the resin component comprises a silane. Aptly, the resin component comprises a defoamer. Suitable defoamers are supplied by BYK Chemie. The defoamer may comprise silicone.

In one embodiment, the method comprises the use of a curing agent. As used herein, the term "curing agent" may be interchanged with the term "hardener" or "activator". The type of curing agent used in the invention will depend upon the type of resin used. Aptly, the curing agent is a liquid at ambient temperature. In one embodiment, the curing agent is a paste at ambient temperature.

Aptly, the curing agent is an amine and is for use as a hardener of an epoxy resin. In one embodiment, the curing agent comprises at least one of a primary amine, a modified primary amine, an aliphatic, a cycloaliphatic, an anhydride, or combinations thereof. Aptly, the curing agent is an amine e.g. a polyamine e.g. an aliphatic polyamine. In one embodiment, the curing agent is a modified aliphatic amine. In one embodiment, the curing agent is a cycloaliphatic polyamine.

In one embodiment, the curing agent comprises an aliphatic amine compound e.g. diethylene triamine, triethylene tetramine and/ or tetraethylene pentamine. Aptly, the curing agent may comprise an aromatic amine e.g. metaphenylene diamine and/ or diamino diphenyl sulfone.

In one embodiment, the curing agent is an agent selected from a group of agents marketed under the trade name Polypox and manufactured by the Dow Chemical Company. Other suitable curing agents are produced by the Dow Chemical company for example curing agents sold under the trade names D.E.H.™ e.g. D.E.H. 20, D.E.H. 24, D.E.H. 26 and D.E.H. 29. Further suitable curing agents are sold by Momentive under the trade name EPIKURE™. Further suitable curing agents include the agent sold under the trade name UKH 136.

Aptly, the curing agent comprises an anhydride. Aptly, the curing agent comprises an anhydride and an accelerator e.g. a tertiary amine. Aptly, the curing agent comprises nadic methyl anhydride (NMA).

In one embodiment, the curing agent comprises a polyamide.

Aptly, when the method comprises the use of a polyester resin, the curing agent is an organic peroxide.

The method of the present invention comprises the use of an enclosure into which the components are added. The enclosure acts as a mold or casting block and its dimensions dictate the dimensions of the resultant apparatus. The resultant apparatus may be subject to further modification, e.g. heating, to further shape it into a desired form or surface modification.

Aptly, the inner surface of the enclosure is polished to ease removal of the apparatus once cured. In one embodiment, the enclosure is manufactured from melamine faced MDF. Alternatively, the enclosure is manufactured from polished steel, stainless surface, glass, HDPE, rubber and/or silicone. Aptly, the enclosure comprises an easy release plastic surface as an inner surface. Aptly, the inner surface is treated with a release agent. Aptly, the release agent is a PVA release agent. In one embodiment, the release agent is a wax.

Aptly, the enclosure has dimensions which correspond to the desired dimensions of an apparatus to be manufactured. In one embodiment, the enclosure has a substantially rectangular base panel. Alternatively, the enclosure may comprise for example a circular base panel, a square base panel, a triangular base panel or other suitable shaped base panels.

Aptly, the enclosure comprises a base which has dimensions of approximately 1000mm x 3000mm. Aptly, the enclosure comprises a base which has dimensions of approximately 1220 mm x 3050mm.

Aptly, the first aggregate component has a characteristic which distinguishes it from a second aggregate component and aptly from other further aggregate components. Aptly, the characteristic of the first aggregate component is a greater weight than the second aggregate component and/or further aggregate components.

Aptly, the characteristic of the first aggregate component is a greater average concentration than the second and/or further aggregate components. Aptly, the first aggregate component comprises individual aggregate elements which have an average cross-section that is greater than the average cross section of individual aggregate elements of the second and/or further aggregate components.

Aptly, the characteristic of the first aggregate component is a greater density per surface area than the second aggregate component and/or further aggregate components.

Aptly, the mixture of resin component, curing agent and aggregate comprises a first aggregate component having a greater mass concentration than the mass concentration of any other aggregate component in the mixture.

Aptly, the first aggregate component comprises individual aggregate elements (e.g. a glass chip) which have an average cross section of between about 3mm to about 80 mm. In one embodiment, the first aggregate component has an average cross section of approximately 3mm, 5mm, 10mm, 15mm, 20mm, 25mm, 30mm, 35mm, 40mm, 45mm, 50mm, 55mm, 60mm, 65mm, 70mm, 75mm, 80mm or greater. In one embodiment, the first aggregate component comprises individual aggregate elements which have a cross section of 15 mm or greater. In one embodiment, the first aggregate component comprises individual aggregate elements which have a cross section of 15 mm or less. In one embodiment, the first aggregate component comprises individual aggregate elements which have a cross section of between about 8mm and about 15 mm.

In one embodiment, the first aggregate component comprises individual aggregate elements which are cubes approximately 2x12x12 mm in dimension. That is to say, in one embodiment, the individual aggregate elements comprise a cuboid-like shape. Aptly, an individual aggregate element of the first aggregate component weighs 3 grams or more e.g. 3, 4, 5, 6, 7, 8, 9, or 10g. In one embodiment, the individual aggregate element of the first aggregate component weighs approximately 4g.

In one embodiment, the second aggregate component comprises individual aggregate elements which have a cross section of 15 mm or less. Aptly, the second aggregate component comprises individual aggregate elements which have a cross section of 8 mm or less. Aptly, the second aggregate component comprises individual aggregate elements which have a cross section of 1.5 mm or less. Aptly, the second aggregate component comprises individual aggregate elements which weigh less than 4g e.g. 3g, 2g, 1 g, 0.5g, 0.3g, 0.2g or less.

In one embodiment, the third aggregate component comprises individual aggregate elements which have a cross section of 15 mm or less. Aptly, the third aggregate component comprises individual aggregate elements which have a cross section of 8 mm or less. Aptly, the third aggregate component comprises individual aggregate elements which have a cross section of 1.5 mm or less. Aptly, the third aggregate component comprises individual aggregate elements which have a cross section of less than about 0.5mm. Aptly, the third aggregate component weighs less than 4g e.g. 3g, 2g, 1 g, 0.5g, 0.3g, 0.2g or less.

In one embodiment, a portion of the first aggregate component is a recycled material. In one embodiment, a portion of the second aggregate component is a recycled material. Aptly, a portion of the further aggregate component(s) is a recycled material. The recycled material may be (a) pre-consumer recycled material, (b) post-consumer recycled material or a mixture of (a) and (b).

The aggregate component may be sourced from any suitable source e.g. waste material from the automotive industry, construction industry, hospitality industry, consumer sources and recycling cooperatives or the like.

Aptly, the first, second and/or further aggregate component(s) used to form the apparatus of the present invention each independently comprise at least 30% recycled material, e.g. 35%, 40%, 45%, 50%, 55%, 60%, 65%, 70%, 75%, 80%, 85%, 90% or greater.

Aptly, the first aggregate component comprises glass chips, stone chips, engineered stone chips, shells, plastic chips, mirror chips and metal chips. In one embodiment, the first aggregate component comprises recycled glass chips.

In one embodiment, the first aggregate component comprises non-uniformly sized elements e.g. non-uniformly sized glass chips.

In one embodiment, the first aggregate component comprises a bead mixture. Aptly, the bead mixture comprises at least one of polymeric beads, glass beads, cork beads, sand beads, or combinations thereof. Aptly, the bead mixture comprises non-uniformly sized beads.

Aptly, the second aggregate component comprises glass chips, stone chips, engineered stone chips, shells, plastic chips, mirror chips and metal chips, rare glass chips and/or gold leaf wherein the second aggregate component has a smaller average concentration than the average concentration of the first aggregate component. In one embodiment, the second aggregate component comprises non-uniformly sized elements e.g. non-uniformly sized glass chips.
The first aggregate component may comprise individual aggregate elements which differ in colour so as to form a multi-coloured apparatus. Alternatively or in addition the second and/or further aggregate components may differ in colour and texture to the first aggregate component thus adding to the decorative nature of the apparatus formed.
Aptly, the further, e.g. third or fourth, aggregate component comprises glass chips, stone chips, engineered stone chips, shells, plastic chips, mirror chips and metal chips, rare glass chips and/or gold leaf wherein the further aggregate component has a smaller average concentration than the average concentration of the first aggregate component and the second aggregate component. Under certain circumstances, the further aggregate component comprises non-uniformly sized elements.

The apparatus can take a desired shape and size. Aptly the apparatus is for providing a surface. The shape and size of the apparatus will depend on the shape and size of the enclosure. The enclosure may have a substantially flat bottom internal surface. In this embodiment, the apparatus will comprise a substantially flat surface. Alternatively, the enclosure may have an undulating lower internal surface, whereby the resultant apparatus will have a correspondingly undulating surface.

In one embodiment, the apparatus provides a surface. In one embodiment, the apparatus is a panel. In one embodiment, the apparatus is substantially rectangular. The apparatus may be for use in a domestic setting e.g. as a countertop. Aptly, the apparatus is a kitchen counter top.

In one embodiment, the method further comprises, following curing, heating the apparatus to bend the apparatus into a desired shape. Thus, the apparatus which is removed from the mold may be in the form of a panel or the like and is then further modified to form a different shape e.g. to introduce curved surfaces such as for use as a shower tray or sink.

The apparatus may be for use as a tray for a shower enclosure in a domestic and/or commercial setting. The apparatus may be for use as a screen for a shower enclosure. Aptly, the apparatus is a bath or a sink. In one embodiment, the apparatus is a bathroom vanity unit.

Aptly, the apparatus is for use in commercial and/or residential settings. The apparatus may be for use in an office environment, e.g. as a desktop or reception desktop surface. Aptly, the apparatus is for use as a countertop in a commercial setting e.g. in shops, hotels, leisure centres and the like.

The worktop may be for use in an industrial setting e.g. a laboratory or factory. The apparatus may be for use as a top for a table e.g. a dining table.

Aptly, the apparatus is for use as a flooring panel. In one embodiment, the apparatus is for use as a wall panel. Aptly, the apparatus is for use as building cladding.

Aptly, the apparatus provides a terrazzo surface. Aptly, the apparatus provides a terrazzo surface which comprises recycled glass chips. Certain embodiments of the present invention therefore provide an environmentally friendly surfacing apparatus.

Aptly, the resultant apparatus may comprise a greater percentage by volume of the second aggregate component than the first aggregate component. Aptly, the resultant apparatus comprises a greater percentage by volume of the second and/or further aggregate component than the first aggregate component.

Aptly, the apparatus comprises approximately 15 to 40% by volume of the first aggregate component e.g. 15, 16, 17, 18, 19, 20, 25, 30, 35 or 40%. Aptly, the apparatus comprises approximately 25% or greater by volume of the second aggregate component e.g. approximately 25%, 30%, 35%, 40% or greater.

### Figures

Embodiments of the present invention will now be described hereinafter, by way of example only, with reference to the accompanying drawings in which:
**Figure 1** is a perspective side view of an apparatus of embodiments of the present disclosure;
**Figure 2** is a perspective side view of the enclosure used in embodiments of the present invention;
**Figure 3** illustrates different stages of the method of the present invention. Figure 3A illustrates a cross section view of the enclosure containing an intermediate mixture produced by a method according to an embodiment of the present invention. Figure 3B illustrates a cross section view of the enclosure containing a mixture produced by embodiments of the present invention;
**Figure 4** illustrates an assembly for use in the method of certain embodiments of the present invention. Figure 4a is a plan view of the assembled apparatus. Figure 4b is a schematic representation of the assembled apparatus for use in producing the surfacing apparatus of embodiments of the present disclosure;
**Figure 5** illustrates a mold receiving station of the assembly of certain embodiments of the present disclosure. Figure 5A is a top view of the mold receiving station. Figure 5B is a side view of the mold receiving station. Figure 5C is a front view of the mold receiving station. Figure 5D is a side perspective view of the mold receiving station whilst Figure 5E illustrates the mold receiving station with a mold positioned on the upper surface thereof;
**Figure 6** illustrates an aggregate addition station of the assembly of certain embodiments of the present disclosure. Figure 6A is a top view of the aggregate addition station. Figure 6B is a side view of the aggregate adding station. Figure 6C is a front cross sectional view of the aggregate adding station. Figure 6D is a side perspective view of the aggregate adding station;
**Figure 7** is a schematic representation of an alternative aggregate addition station;
**Figure 8** illustrates a mold levelling station of the assembly of certain embodiments of the present disclosure. Figure 8A is a top view of the mold levelling station. Figure 8B is a side view of the mold levelling station. Figure 8C is a side view of the mold levelling station. Figure 8D is a top perspective view of the mold levelling station. Figure 8E is a side perspective view of the mold levelling station;
**Figure 9** is a side view of a container of embodiments of the aggregate adding station comprising slats in an open position so as to allow aggregate to pass through;
**Figure 10** is a side view of a container of embodiments of the aggregate adding station comprising slats in a closed position so as to retain aggregate in the container;
**Figure 11** is a schematic representation of the process of transferring aggregate from the container of embodiments of the aggregate addition station; and
**Figure 12** is a schematic representation of the process of transferring aggregate from the container of embodiments of the aggregate addition station.

### Detailed Description of Embodiments of the Invention

Embodiments of the present invention will now be described in more detail below. In the drawings like reference numerals refer to like parts.

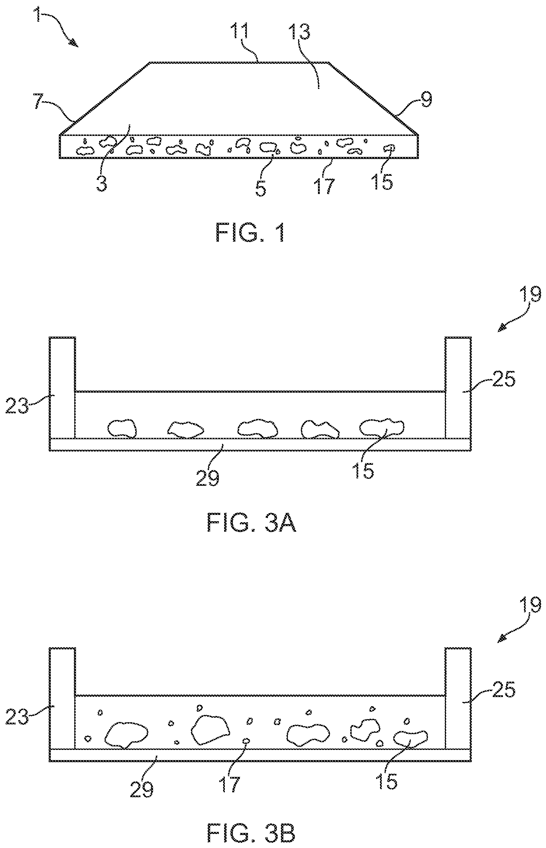

Figure 1 illustrates an apparatus 1 in the form of a panel which is produced using the methods described herein. The panel 1 includes a body 3. The panel further includes a front edge 5, a first side edge 7, a further side edge 9 and a rear edge 11.

The panel provides an upper contact surface 13. The upper contact surface may be decorative and show various patterns and/or different colours. In embodiments in which the apparatus is a panel, typical dimensions may be for example 1000 mm by 3000 mm. In one embodiment, the panel has dimensions of approximately 1220mm by 3050mm. In one embodiment, the mold is approximately 700x 3050mm or 1 m x 3050 mm or 1 m x 4m. Aptly, the apparatus has a thickness of between about 6mm to about 30mm. In one embodiment, the panel is approximately 6 to 8mm in thickness. The panel may be for attachment to an underlying panel composed of a material which differs from the surfacing apparatus. Thus, the apparatus 1 may form a layer in a multilayer apparatus. In one embodiment, one or more layers are formed from a material selected from wood, concrete, metal and chipboard.

It will be appreciated that the dimensions of the apparatus will alter depending on the intended use of the apparatus. The apparatus includes at least two types of aggregate component, 15, 17.

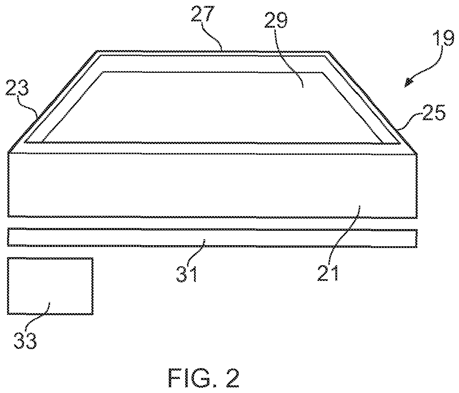

Figure 2 illustrates an enclosure 19 for use in the method of the present invention. Aptly, the enclosure 19 is a mold and its dimensions correspond to the desired dimensions of the initial apparatus to be formed. It will be appreciated that the mold can have a wide range of different shapes, sizes etc. Figure 2 illustrates a mold suitable for producing a panel e.g. for use as a counter top or table surface. The panel may be subject to further modification such as heating to further shape it e.g. to introduce curved surfaces.

The enclosure 19 includes a front wall 21, a side wall 23, a further side wall 25 and a back wall 27. The enclosure further includes a base panel 29 which is lower than the top surface of the surrounding walls. The walls may be for example 6 mm to 30mm in thickness.

In one embodiment, the enclosure sits on top of a vibrating table 31 which includes a vibrating mechanism 33 and a motor (not shown).

Figure 3 is a cross section through the enclosure of Figure 2. Figure 3A shows a cross section of the enclosure filled with a liquid resin component, a liquid curing agent and the first (largest and/or heaviest) aggregate component 15. The first aggregate component sinks to the bottom of the liquid mixture when first poured into the enclosure. Figure 3B shows a cross section of the enclosure following further addition of a second (smaller and/or less heavy) aggregate component 17 and vibration of the mixture as described below in the Examples.

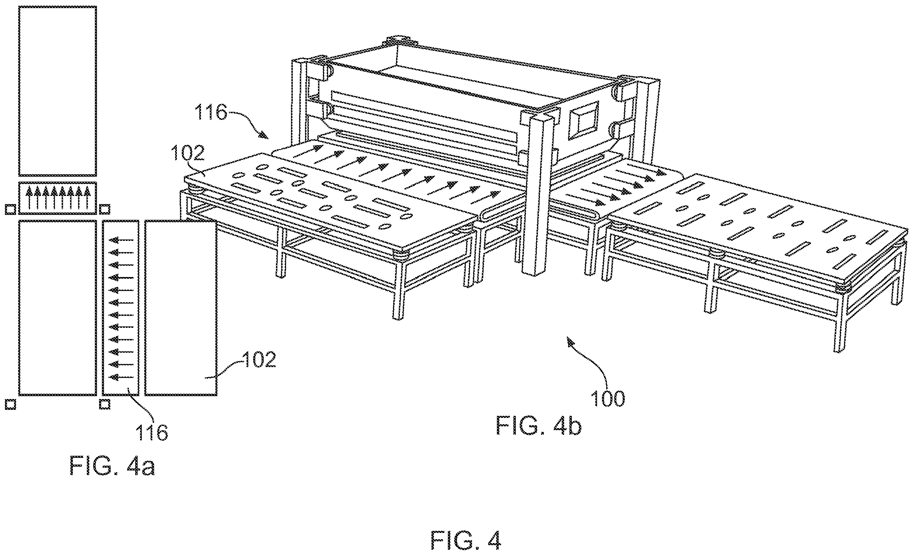

In one embodiment, the apparatus for providing a surface 1 may be produced using an assembly as illustrated in Figures 4 to 11. Furthermore, the assembly can be used to add aggregate to the mold and aptly to an activated resin mixture which has been pre-agitated in the mold as described above. Certain embodiments of the present invention which comprise the use of the assembly illustrated in Figure 4 allow for at least partial automation of the method.

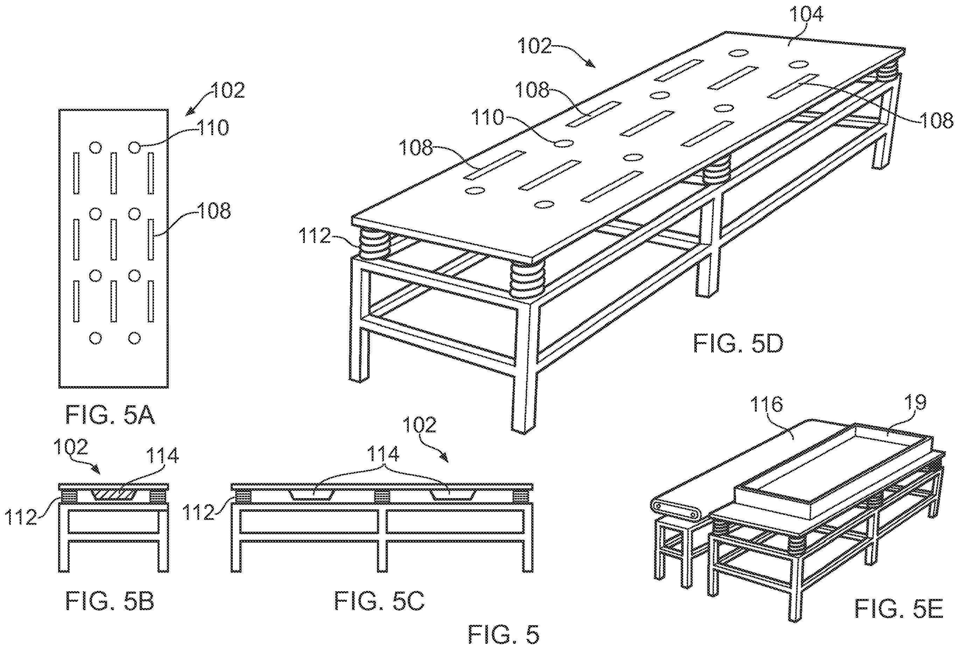

In more detail, Figure 4 illustrates an assembly 100 for manufacturing a surface apparatus, e.g. a worktop, as described herein. As shown in Figure 4, the apparatus comprises a mold receiving station 102. The mold receiving station may be in the form of a table. The table is for supporting the enclosure e.g. the mold 19. The assembly also includes a transfer platform 116. Figure 5e depicts the mold positioned on the upper surface of the mold receiving station 102.

Figures 5a to 5e illustrate the mold receiving station 102 in more detail. The mold receiving station includes a table which has an upper surface 104 which is sized to support the mold 19. Therefore, the dimensions of the table are not necessarily important provided the mold is fully supported and so substantially level. Exemplary dimensions of the mold are provided herein. The surface 104 is substantially flat. The upper surface 104 includes at least one transfer element for aiding transfer of the mold to the mold receiving station and subsequently to an aggregate addition station 106 which is described below.

In the illustrated embodiment, the transfer elements are a series of rollers 108 which are positioned along and set into the upper surface 104 of the mold receiving station 102. In the illustrated embodiment, the rollers 108 each have a longitudinal axis of rotation which is parallel to the longitudinal axis of the mold receiving station 102. The rollers are air activated to rise and fall to ensure a contact with the mold.

In other embodiments which are not illustrated, the transfer elements may comprise for example jets of air projected upwardly from the upper surface of the table. Alternatively, the transfer elements may be a trolley or other mechanism known to those skilled in the art.

The upper surface 104 of the table of the mold receiving station 102 also comprises at least one receiving element which positions and releasably secures the mold 19 to the upper surface 104. Figure 4 shows the receiving elements as a plurality of vacuum clamps 110. The vacuum clamps are each attached to a compressed air line (not shown) via an air actuator that causes a vacuum that is used to clamp the mold.
The vacuum clamps each include a vessel with two opposing openings, each with a sealed rubber perimeter which pushes against the parallel surfaces to be secured.

Once the mold 19 is transferred to the upper surface 104, it is positioned at the desired location. Downward pressure is then applied to the enclosure e.g. the mold 19 to create a vacuum between a lower surface of the mold and one or more vacuum clamps in order to secure the mold to the upper surface. The vacuum clamps thus keep the mold secured during vibration of the table.

Once the enclosure is secured in place, a resin and curing agent mixture, which is premixed, is added to the mold. The mold receiving station comprises a plurality of spring isolators 112 positioned at each corner on an underside of the first table. The mold receiving station includes at least one motor 114 which vibrates both the upper surface, and therefore the mold secured thereon so evenly distributing the resin mixture in the mold.

The enclosure e.g. the mold 19 is vibrated for e.g. 10 minutes at a resonance described herein which is sufficient to cause the resin mixture to be spread evenly in the mold. Vibration of the resin mixture in the mold also allows air inclusions to escape from the upper surface of the resin.

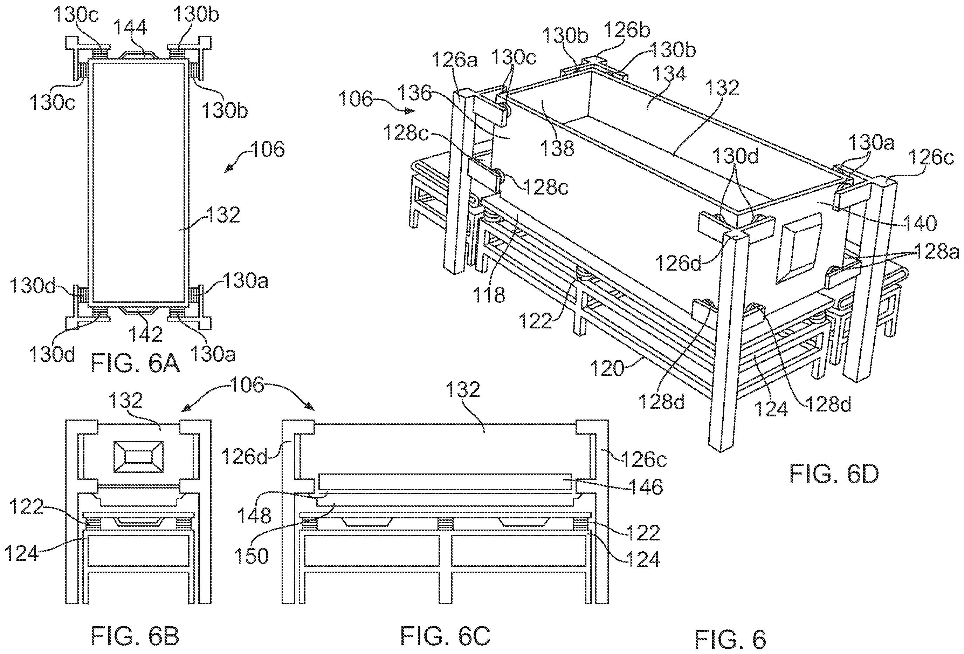

Aptly, the assembly also comprises an aggregate addition station 106 which is illustrated in Figure 6. The assembly may also include a transfer platform which is positioned between the mold receiving station and the aggregate addition station to aid transfer of the mold between the two stations. The transfer platform 116 is shown in Figure 4 and Figure 5E.

The aggregate addition station 106 is illustrated in Figure 6. Aptly, the aggregate addition station comprises a table 120 which includes an upper surface 118. The table 120 may have similar dimensions to the table of the mold receiving station and is sized to accommodate the mold. The table 120 may also comprise a plurality of spring isolators 122 each connecting the upper surface 118 to a table frame 124. The table 120 also includes a plurality of support posts 126a, 126b, 126c, 126d which extend substantially vertically above the table.

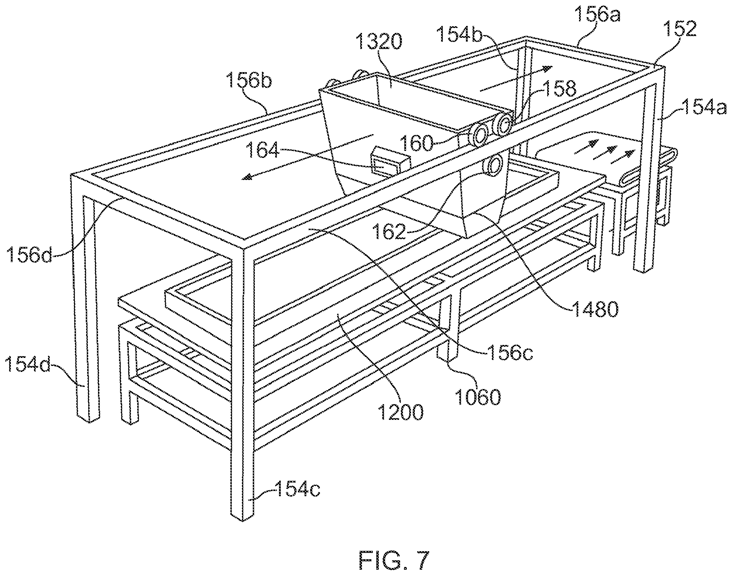

Each support post is connected via two pairs of resilient members e.g. springs 128a, 128b, 128c, 128d (not shown) and 130a, 130b, 130c, 130d to a container 132 for holding aggregate which is to be deposited into the mold. The container 132 is held in a fixed position between the support posts, as shown in Figure 6c. An alternative embodiment is shown in Figure 7 which will be described in more detail below.

The container comprises two side walls 134, 136 and two end walls 138, 140. One or more motors 142, 144 is attached to each end wall 138, 140. The motors when switched on are used to vibrate the container.

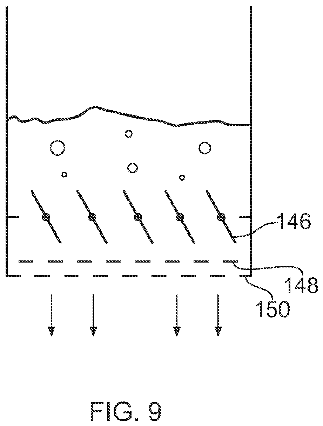

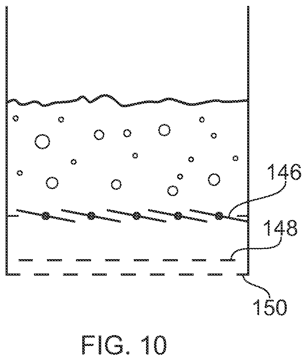

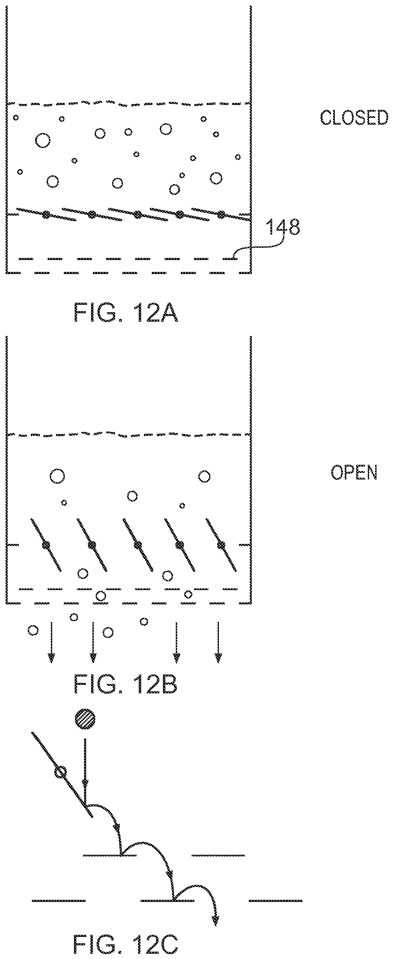

The container 132 includes a plurality of elongate slats or louvre panels 146 positioned in a bottom region of its interior. The slats 146 are illustrated in Figure 9 and are rotatable about a pivot to move between an open position and a closed position, as illustrated in Figure 9 and Figure 10. When the slat edges are in the closed position, the slats overlap to form a continuous surface across the interior area of the container. When the slats are in the closed position, aggregate can be poured into the container, so falling onto the surface of the closed slats and retained within the container. When required, the slats are pivoted to an open position, as shown in Figure 9, causing aggregate to fall between the slats. This process is shown in Figure 12A and 12B.

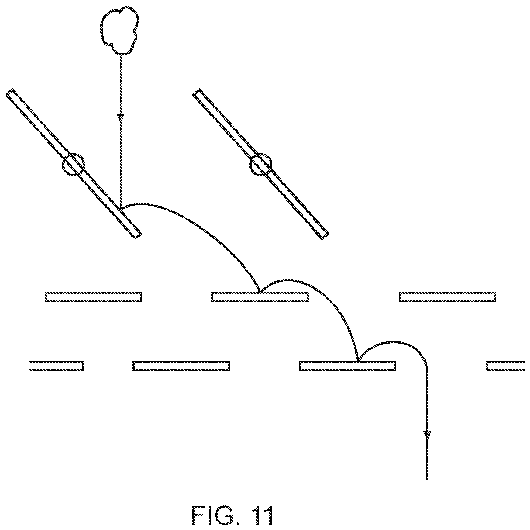

The container also includes at least one mesh 148 positioned beneath the slats 146. The container may include more than one mesh, 148, 150 as shown in Figure 9. If more than one mesh is provided, the apertures of an upper mesh 148 are in a non-aligned vertical relationship to the apertures of a lower mesh 150 so that when a piece of aggregate passes through an aperture of the upper mesh, it is forced to fall in a labyrinthine path. That is to say, the aggregate piece may not immediately pass through an aperture of the lower mesh and fall vertically downwards. The relationship of the mesh apertures is shown in Figure 11, for example.

The mesh apertures are sized to allow the aggregate pieces to pass through. The provision of one or more meshes reduces the speed of fall of the aggregate which may allow fewer air inclusions to be incorporated into the resin mixture when the aggregate hits the surface of the resin mixture in the mold.

Aptly, the container may include one, two, three or more meshes. Aptly, the meshes are provided across the whole interior of the container and are provided one above the other. Aptly, the one or more meshes are provided beneath the slats 146.

Each mesh may have apertures that differ in size to the aperture of the further meshes, provided that the apertures permit the aggregate to pass through.

The slats may be composed of wood, metal or any other suitable material. Aptly, each slat is approximately 50mm to 100mm in width. Aptly, the slats are each approximately 75mm in width.

The container 132 is positioned above an upper surface 118 of the table 120. The mold is transferred from the mold receiving station to the upper surface 118 via the transfer platform 116.

An alternative embodiment of the aggregation addition station 1060 is shown in Figure 7. The station 1060 comprises a frame 152 surrounding a table 1200. The frame is rectangular and includes four vertical struts 154a, 154b, 154c, 154d and four horizontal struts 156a, 156b, 156c, 156d. A container 1320 is movably supported on the horizontal struts 156b and 156c above the upper surface of the table 1200.

The container comprises two upper castors 158 and 160 and a lower castor 162 which contact the horizontal strut and permit the container 1320 move along the length of the frame 152.

A motor 164 is attached to the container 1320 to vibrate the container. The container also includes a mesh 1480 extending across the container base. The container may include more than one mesh in certain embodiments. The container 1320 shown in Figure 7 does not include slats or louvre panels. In this embodiment, the aggregate is contained within the container by way of the mesh 1480 and a lack of vibration.

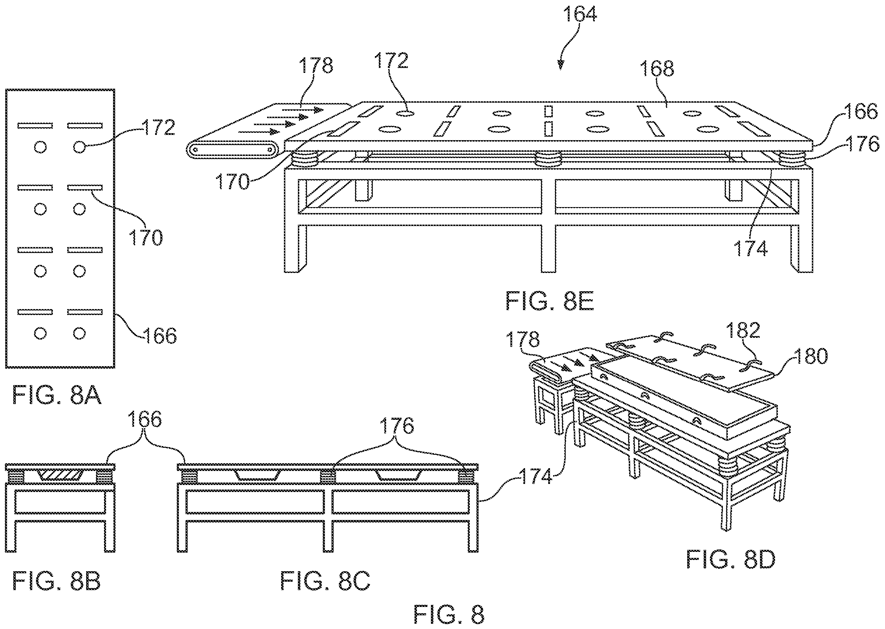

The assembly also comprises a levelling station 164 as shown in Figure 8. The levelling station 164 includes a third table 166 having an upper surface 168. The upper surface include transfer elements e.g. rollers 170 which are as described above in relation to the mold receiving station. The upper surface of the table may comprise two or more rollers, e.g. 3, 4 5, 6, 7, 8, 9 and/or 10 rollers. The upper surface of the table also includes vacuum clamps 172 which are similar to those provided in the mold receiving station. The upper surface 168 is connected to a frame 174 of the table 166 via a plurality of springs 176.

The mold can be transferred from the aggregate addition station to the levelling station via a second transfer platform 178. The transform platform may comprise a roller conveyor which moves the mold to the levelling station from the table of the aggregate addition station. The third table may also include one or more vibrating motors (not shown).

### Examples

Certain embodiments of the method of the present invention is described in a non-limiting manner below:
Initially, an enclosure e.g. a mold is prepared. The mold has fixed edges, the height of which is dependent on the required thickness of the apparatus to be produced. The size and dimension of the mold determines the size and dimension of the apparatus e.g. a panel. In the illustrative embodiment, the mold has a rectangular base of approximately 1220mm by 3050mm and have sides of approximately 20mm in height.

Other suitable mold dimensions include for example 1220mm x 4050mm and 1000mm x 3000mm or the like.

The mold is manufactured from melamine faced MDF which provides a polished, non-stick surface which allows easy removal of the apparatus once cured. Of course, the mold may be manufactured from any other suitable material than can contain the components and tolerate the curing and vibrating conditions. The mold is positioned at a pouring station and on a table which is capable of vibrating at differing frequencies. The vibrating table is fitted with springs which isolate the table top from the supporting legs to diminish the energy loss and damage. The table also includes an inverter for varying the frequency and force of vibration. Vibration tables which may be used in the present invention include those manufactured by VIBTEC.

The method is carried out at ambient temperature and in a dry environment with air extraction.

The resin, e.g. an epoxy resin, UKR137, and a curing agent, e.g. UKH136 are mixed together prior to being poured into the mold to a defined level which is determined by the thickness, type, and size of aggregate. Further components such as pigments and defoamers may also be added at this stage if desired or added prior to activation of the resin component. UKR137 contains a defoamer and therefore a separate defoamer is not required in this embodiment. A small amount (e.g. 0.10% of the final composition of the apparatus) of a silane (silane 187) is also added at this stage. The components are mixed together using a mechanical plaster mixer.

Aptly, the mixture comprises resin: curing agent at a ratio of 2:1 (by volume).

The mold is vibrated at a low frequency (approx. 25Hz) whilst the resin/curing agent mixture is added to the mold. The vibration caused encourages any air inclusions which are present to escape from the mixture. The mold is vibrated for approximately five minutes in this step.

Aggregate components are then added to the mold. The first aggregate components to be added are those with the greatest density of the aggregates to be used to manufacture the apparatus. The rate of addition is dependent on the size of the mold and may vary from about 2L/person/min when a pouring jug is used to about 8 to 10L/sqm/min using the assembly described herein. In one embodiment, the aggregate is added using pouring jugs. In one embodiment, the aggregate is added using the assembly described herein and illustrated in Figures 4 to 11.

Approximately 75 litres or 150kg of the first aggregate component is used in a mold having the dimensions of 1220mm x 3050mm x 20mm.

The vibration of the mold is then increased in frequency and/or force during the addition of the first aggregate component and maintained following the addition of the first aggregate component. The high frequency vibration has a frequency of approximately 3 2Hz. The increase in vibration frequency allows air which is present in the mixture is to be released from the surface of the mixture in the mold. The aggregate, resin, curing agent mixture is subject to the high frequency vibration for approximately five to ten minutes.

The aggregate components typically sink to the bottom of the mold during this step.

Aptly, an amount of a different type of aggregate component is then added. The second aggregate, e.g. scattered mirror, has a lower density per surface area than the first aggregate component. The second aggregate is added at the same rate as the first aggregate or at a slower rate to keep air inclusion to a minimum. The mold is vibrated at the same or substantially the same frequency as the vibration used during the addition of the first aggregate component. In some cases, the frequency of the vibration may be reduced for a short period of time to allow the aggregate component to settle.

The mold is vibrated until the second aggregate has been added to the mixture. The second aggregate components sink within the liquid mixture to between individual elements of the first aggregate component.

Following the addition of the second aggregate component, further aggregate components may be added if required.

Once all of the aggregate components have been added to the activated resin component, an optional further step is the addition of a thin layer of activated resin component to the upper surface of the mixture. The provision of an upper layer of activated resin component may help to prevent the upper surface becoming brittle post curing. The mold is vibrated whilst the activated resin component is poured onto the top surface of the mixture. The resin components used to form an upper layer is the same as that used throughout the process.

Aptly, the mixture is then levelled by pulling a flat bar pulled across the upper surface of the mold whilst vibration is applied. The vibration applied during levelling may have a frequency of between about 25Hz and 42Hz.

The mold is then removed from the pouring station to be cured. The composite mixture is cured at ambient temperature for between 12 to 24 hours, depending on the surrounding temperature. Once cured, the resulting panel is removed from the mold, the lower surface is calibrated and the upper surface polished to ensure a smooth profile.

In certain embodiments, the method comprises the use of the assembly shown in Figures 4 to 11 can be used to in the method to manufacture the panel.

Aptly, the enclosure, for example the mold 19 is placed on the upper surface 104 of the mold receiving station 102. Downward pressure is placed on the mold onto the vacuum clamps to secure it in place. The mold is vibrated at a low frequency (approx. 25Hz) whilst the resin/curing agent mixture is added to the mold.

The induced vibration encourages any air inclusions which are present to escape from the mixture. The mold is vibrated for approximately five minutes in this step.

A user then releases the mold from the vacuum clamps and moves it to the upper surface of the second table 120, 1200. The transfer elements e.g. the rollers 108 assist in the transfer of the mold. The mold is positioned underneath the container 132, 1320.

The container is preloaded with aggregate. In some embodiments, the container 132 is filled with aggregate components of different characteristics. For example, the container 132 may be loaded with aggregate components of different sizes, types and/or densities. In alternative embodiments, e.g. when the container 1320 is used, only aggregate components having individual pieces of substantial the same size is added to the container at any one time.

Prior to the aggregate being added to the container 132, the slats are positioned in the closed position so that the aggregate is retained in the container. That is to say the slats are positioned such that an edge of a first slat overlaps an adjacent edge of an adjacent slat so as to form a continuous surface. The aggregate falls onto the slats in the closed position.

The container is then vibrated and the slats are moved to an open position so as to allow the aggregate to fall onto the uppermost mesh of the container. Aptly, vibration is applied to the mesh or meshes whilst the aggregate is dropped onto the meshes.

The aggregate falls through the one or more meshes into the mold which contains the activated resin mixture positioned on the upper surface of the second table below. The method of producing the activated resin mixture is as described above. The apertures of adjacent meshes are offset and therefore the bulk of the aggregate component does not fall straight through the meshes, as shown in Figure 11. Instead, the aggregate pieces are forced to take a labyrinthine path downwards. As a result, the downward movement of the bulk of the aggregate pieces is slowed down, resulting in the aggregate entering the activated resin mixture in the mold at a reduced speed. This contributes to a reduction in air inclusions being introduced into the activated resin mixture.

The table of the aggregate addition station is vibrated whilst the aggregate is added to the mold. Vibration is applied at 32HZ for 10 minutes for example.

Vibration continues to be applied following the completion of aggregate addition to encourage complete mixing of the aggregate in the resin. Once this has been completed, the motors are switched off and the vibration is stopped.

If required, the container 132 may be filled with a further aggregate component, e.g. one which comprises smaller aggregate pieces or pieces of a different aggregate material. Prior to re-filling the container, the slats are rotated to a closed position. The above process may then be repeated.

The process may be repeated to provide further aggregate components if required.

Once the aggregate components have been added, the mold, which is now filled with an aggregate-resin mixture, is then transfer to the levelling station via a second transfer element 178. The upper surface of the aggregate-resin mixture can be levelled. If required the upper surface of the mixture can also pressed using a panel 180 comprising handles 182.

An alternative method of adding aggregate to a resin mixture may use the aggregate addition station shown in Figure 7. Aggregate is added to the container whilst the container is vibrated. The table of the aggregate addition station 1320 is also vibrated. The aggregate falls through the mesh or meshes into the mold, which contains the resin mixture. The container is travelled along the horizontal struts whilst the aggregate is deposited into the mold. If required, once the container is travelled along the length of the table, it can be travelled in the opposite direction, towards its starting position.

In this embodiment, the aggregate added to the container is of a similar size. Once the aggregate has been added to the mold, a further mass of aggregate may be loaded into the container. The further mass of aggregate may be of a similar size to the previously loaded mass or may be a differing size.

Once the required aggregate has been added, the mold may be vibrated for a predetermined length of time before being transferred to the levelling station as described above. The resin aggregate mixture can be levelled to a predetermined thickness using for example a trowel, a levelling edge, a press or vibratory compaction. In one embodiment, the thickness is between about 6mm and about 20mm.

Once the aggregate-resin mixture has been levelled and optionally pressed, the mold may be transferred to a curing station (not shown) where the mixture is cured. The mixture may be cured at a surrounding temperature of between about 10°C and about 35°C.

Optionally, following curing heat can be used to bend the panel into a desired shape e.g. a sink or the like.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

## Claims

1. A method of manufacturing an apparatus that provides a surface and which comprises a resin component and an aggregate component, the method comprising:
**a.** pouring a resin component and a curing agent into an enclosure (19);
b. vibrating the enclosure in a first vibration mode so as to agitate the resin and curing agent;
c. adding a first aggregate component (15) to the enclosure;
d. vibrating the enclosure in a further vibration mode so as to agitate the resin component, curing agent and aggregate component and form a resin/ curing agent/ first aggregate component mixture, wherein the step of applying the further vibration mode comprises encouraging air to be released from an upper surface of the resin/ curing agent/ first aggregate component mixture.

2. The method as claimed in claim 1, wherein the further vibration mode has a greater amplification and/or frequency than the first vibration mode.

3. The method as claimed in claim 1 or claim 2, comprising mixing the resin component and the curing agent together to form an activated resin component prior to being poured into the enclosure in (a), optionally wherein the resin/curing agent mixture is a liquid.

4. The method as claimed in any preceding claim, which comprises: (e) adding a second aggregate component to the enclosure to form a mixture comprising a first aggregate component, a second aggregate component (17), a resin component and a curing agent, wherein the second aggregate component (17) has a lower average weight than the first aggregate component (15).

5. The method as claimed in any preceding claim, wherein the first vibration mode has a frequency of vibration of between about 20 and 45 Hz, e.g. about 20, 25, 30, 35, 40 or 45 Hz, and optionally wherein the method comprises applying the first vibration mode for between about 1 minute and 10 minutes e.g. about 1, 2, 3, 4, 5, 6, 7, 8, 9, or 10 minutes, and further optionally wherein the further vibration mode has a frequency of vibration greater than about 25 Hz e.g. 30, 35, 40, 42, or 45 Hz, and further optionally wherein the method comprises applying the further vibration mode for between about 1 minute and 10 minutes e.g. about 1, 2, 3, 4, 5, 6, 7, 8, 9, or 10 minutes.

6. The method as claimed in any preceding claim, which further comprises the step of:
positioning the enclosure (19) containing the resin component and the curing agent below an aggregate container (132) prior to step (c), wherein optionally the methodcomprises loading the aggregate container with the first aggregate component and optionally at least one further aggregate component, wherein optionally the method further comprises the step of:
re-directing a vertical falling motion of the aggregate component(s) released from the container via at least one mesh layer (148, 150) located between the aggregate component(s) loaded in the aggregate container and the enclosure and wherein the method optionally further comprises the step of:
deflecting falling aggregate component(s) in a transverse direction with respect to a vertical downward direction, via struts of a lower mesh layer having openings offset with respect to openings of an adjacent mesh layer, and further wherein the aggregate container comprises at least one mesh layer.

7. The method as claimed in claim 6, wherein the aggregate container (132) comprises a bottom region and a plurality of elongate parallel panels (146) in the bottom region, wherein the elongate parallel panels are rotatable from an open position in which edges of the panels are spaced apart and a closed position in which edges of adjacent panels at least partially overlap, and optionally wherein the aggregate container is loaded with the first aggregate component, and optionally the further component(s), when the panels are in a closed position, wherein optionally the panels are rotated from the closed position to the open position to release the aggregate component(s) from the container and wherein optionally the method further comprises the step of:
re-directing a vertical downwards falling motion of aggregate component(s) released from the container by locating a region of an upper surface of each panel between the container and the enclosure in the open position.

8. The method as claimed in claim 7, further comprising the step of:
releasing the aggregate component substantially simultaneously across an entire area of the bottom region of the container by rotating the panels (146) in common by the same angle of rotation, wherein optionally the method further comprises:
imparting a transverse component into the falling motion of aggregate component by deflecting the aggregate component with said upper surface of the panels and further wherein the method optionally comprises the step of:
re-directing a vertical falling motion of the aggregate component released from the container via at least one mesh layer located between the panels and the enclosure.

9. The method as claimed in claim 7 or claim 8, further comprising the step of:
deflecting falling aggregate component in a transverse direction with respect to a vertical downward direction, via struts of a lower mesh layer having openings offset with respect to openings of an adjacent mesh layer, wherein optionally the method comprises providing a layer of activated resin component on an upper surface of the mixture in the enclosure, wherein the mixture comprises the first aggregate component, the second aggregate component, the resin component and the curing agent.

10. The method as claimed in any preceding claim, which further comprises the step of:
curing the aggregate component, resin, curing agent mixture in the enclosure mixture.

11. The method as claimed in any preceding claim, wherein the apparatus is one selected from a countertop, a worktop, a table top, a desk top, a panel, wall panel, a shower tray, a shower screen or a floor panel.

12. The method as claimed in any preceding claim, wherein the first aggregate component is selected from glass chips, stone chips, engineered stone chips, shells, plastic chips, mirror chips and metal chips and optionally wherein the second aggregate component is selected from glass chips, stone chips, engineered stone chips, shells, plastic chips, mirror chips, metal chips, gold leaf and rare material chips e.g. rare glass chips.

## Patentansprüche

1. Verfahren zum Herstellen einer Vorrichtung, die eine Oberfläche bereitstellt und die eine Harzkomponente und eine Aggregatkomponente umfasst, wobei das Verfahren Folgendes umfasst:
**a.** Gießen einer Harzkomponente und eines Härtungsmittels in ein Gehäuse (19);
**b.** Vibrieren des Gehäuses in einem ersten Vibrationsmodus, um das Harz und das Härtungsmittel zu schütteln;
**c.** Hinzufügen einer ersten Aggregatkomponente (15) zum Gehäuse;
**d.** Vibrieren des Gehäuses in einem weiteren Vibrationsmodus, um die Harzkomponente, das Härtungsmittel und die Aggregatkomponente zu schütteln, und um ein Harz-/Härtungsmittel-/erstes Aggregatkomponentengemisch zu bilden, wobei der Schritt des Anwendens des weiteren Vibrationsmodus das Anregen von Luft umfasst, von einer oberen Oberfläche des Harz-/Härtungsmittel-/ersten Aggregatkomponentengemischs gelöst zu werden.

2. Verfahren nach Anspruch 1, wobei der weitere Vibrationsmodus eine größere Verstärkung und/oder Frequenz als der erste Vibrationsmodus aufweist.

3. Verfahren nach Anspruch 1 oder Anspruch 2, das das Mischen der Harzkomponente und des Härtungsmittels miteinander umfasst, um eine aktivierte Harzkomponente zu bilden, bevor es in das Gehäuse in (a) gegossen wird, wobei das Harz-/Härtungsmittelgemisch optional eine Flüssigkeit ist.

4. Verfahren nach einem der vorhergehenden Ansprüche, das Folgendes umfasst: (e) Hinzufügen einer zweiten Aggregatkomponente zum Gehäuse, um ein Gemisch zu bilden, das eine erste Aggregatkomponente, eine zweite Aggregatkomponente (17), eine Harzkomponente und ein Härtungsmittel umfasst, wobei die zweite Aggregatkomponente (17) ein niedrigeres Durchschnittsgewicht aufweist als die erste Aggregatkomponente (15).

5. Verfahren nach einem der vorhergehenden Ansprüche, wobei der erste Vibrationsmodus eine Vibrationsfrequenz zwischen ungefähr 20 und 45 Hz aufweist, z. B. ungefähr 20, 25, 30, 35, 40, oder 45 Hz, und wobei das Verfahren optional das Anwenden des ersten Vibrationsmodus für ungefähr 1 Minute bis 10 Minuten umfasst, z. B. ungefähr 1, 2, 3, 4, 5, 6, 7, 8, 9, oder 10 Minuten, und wobei der Vibrationsmodus optional ferner eine Vibrationsfrequenz aufweist, die größer als ungefähr 25 Hz ist, z. B. 30, 35, 40, 42 oder 45 Hz, und wobei das Verfahren optional ferner das Anwenden des weiteren Vibrationsmodus für ungefähr 1 Minute bis 10 Minuten umfasst, z. B. ungefähr 1, 2, 3, 4, 5, 6, 7, 8, 9, oder 10 Minuten.

6. Verfahren nach einem der vorhergehenden Ansprüche, das ferner den folgenden Schritt umfasst:
Positionieren des Gehäuses (19), das die Harzkomponente und das Härtungsmittel umfasst, vor Schritt (c) unter einem Aggregatbehälter (132), wobei das Verfahren optional das Beladen des Aggregatbehälters mit der ersten Aggregatkomponente und optional mindestens einer weiteren Aggregatkomponente umfasst, wobei das Verfahren optional ferner den folgenden Schritt umfasst:
Umleiten einer vertikalen Fallbewegung der vom Behälter gelösten Aggregatkomponente(n) über mindestens eine Maschenschicht (148, 150), die sich zwischen der/den Aggregatkomponente(n), mit der/denen der Aggregatbehälter beladen ist, und dem Gehäuse befindet, und wobei das Verfahren optional ferner den folgenden Schritt umfasst:
Ablenken der fallenden Aggregatkomponente(n) in eine transversale Richtung in Bezug auf eine vertikale Abwärtsrichtung über Streben von einer unteren Maschenschicht, die Öffnungen aufweist, die in Bezug auf Öffnungen von einer angrenzenden Maschenschicht versetzt sind, und wobei der Aggregatbehälter ferner mindestens eine Maschenschicht umfasst.

7. Verfahren nach Anspruch 6, wobei der Aggregatbehälter (132) einen Bodenbereich und eine Vielzahl von länglichen parallelen Platten (146) im Bodenbereich umfasst, wobei die länglichen parallelen Platten aus einer offenen Position, in der Ränder der Platten voneinander beabstandet sind, in eine geschlossene Position drehbar sind, in der sich Ränder von angrenzenden Platten mindestens zum Teil überlappen, und wobei der Aggregatbehälter optional mit der ersten Aggregatkomponente beladen ist, und optional der/den weiteren Komponente(n), wenn die Platten in einer geschlossenen Position sind, wobei die Platten optional aus der geschlossenen Position in die offenen Position gedreht werden, um die Aggregatkomponente(n) vom Behälter zu lösen, und wobei das Verfahren optional ferner den folgenden Schritt umfasst:
Umleiten einer vertikalen Abwärtsfallbewegung der vom Behälter gelösten Aggregatkomponente(n) durch Orten eines Bereichs einer oberen Oberfläche von jeder Platte zwischen dem Behälter und dem Gehäuse in der offenen Position.

8. Verfahren nach Anspruch 7, das ferner die folgenden Schritte umfasst:
Lösen der Aggregatkomponente im Wesentlichen gleichzeitig quer über einem gesamten Gebiet des unteren Bereichs des Behälters durch Drehen der gemeinsamen Platten (146) um den gleichen Drehwinkel, wobei das Verfahren optional ferner Folgendes umfasst:
Vermitteln einer transversalen Komponente in die Fallbewegung der Aggregatkomponente durch Ablenken der Aggregatkomponente mit der oberen Oberfläche der Platten und wobei das Verfahren optional ferner den folgenden Schritt umfasst:
Umleiten einer vertikalen Fallbewegung der vom Behälter gelösten Aggregatkomponente über mindestens eine Maschenschicht, die sich zwischen den Platten und dem Gehäuse befindet.

9. Verfahren nach Anspruch 7 oder Anspruch 8, das ferner den folgenden Schritt umfasst:
Ablenken der fallenden Aggregatkomponente in eine transversale Richtung in Bezug auf eine vertikale Abwärtsrichtung über Streben von einer unteren Maschenschicht, die Öffnungen aufweist, die in Bezug auf Öffnungen von einer benachbarten Maschenschicht versetzt sind, wobei das Verfahren optional das Bereitstellen einer aktivierten Harzkomponentenschicht auf einer oberen Oberfläche des Gemischs im Gehäuse umfasst, wobei das Gemisch die erste Aggregatkomponente, die zweite Aggregatkomponente, die Harzkomponente und das Härtungsmittel umfasst.

10. Verfahren nach einem der vorhergehenden Ansprüche, das ferner den folgenden Schritt umfasst: Härten der Aggregatkomponente, des Harzes und des Härtungsmittelgemischs im Gehäusegemisch.

11. Verfahren nach einem der vorhergehenden Ansprüche, wobei die Vorrichtung eine ist, die aus einer Arbeitsfläche, einer Arbeitsplatte, einer Tischplatte, einer Schreibtischplatte, einer Platte, einer Wandplatte, einer Duschtasse, einer Duschwand oder einer Bodenplatte ausgewählt ist.

12. Verfahren nach einem der vorhergehenden Ansprüche, wobei die erste Aggregatkomponente aus Glassplittern, Steinsplittern, technisch veränderten Steinsplittern, Schalen, Kunststoffsplittern, Spiegelsplittern und Metallsplittern ausgewählt ist, und wobei die zweite Aggregatkomponente optional aus Glassplittern, Steinsplittern, technisch veränderten Steinsplittern, Schalen, Kunststoffsplittern, Spiegelsplittern, Metallsplittern, Blattgold und Seltenmaterialsplittern, z. B. Seltenglassplittern ausgewählt ist.

## Revendications

1. Méthode de fabrication d'un appareil de réalisation d'une surface, et comprenant un composant de résine et un composant d'agrégat, la méthode comprenant :
a. la coulée d'un composant de résine et d'un agent de polymérisation dans une enceinte (19) ;
b. la vibration de l'enceinte dans un premier mode de vibration de façon à agiter la résine et l'agent de polymérisation ;
c. l'adjonction d'un premier composant d'agrégat (15) dans l'enceinte ;
d. la vibration de l'enceinte dans un autre mode de vibration de façon à agiter le composant de résine et former un mélange de résine / agent de polymérisation /premier composant d'agrégat, l'étape d'application de l'autre mode de vibration comprenant l'encouragement du refoulement de l'air depuis une surface supérieure du mélange de résine / agent de polymérisation / premier composant d'agrégat.

2. Méthode selon la revendication 1, l'amplification et/ou la fréquence de l'autre mode de vibration étant supérieures à celles du premier mode de vibration.

3. Méthode selon la revendication 1 ou selon la revendication 2, comprenant le mélange du composant de résine avec l'agent de polymérisation de façon à former un composant de résine activé préalablement à la coulée dans l'enceinte au point (a), en option le mélange de résine / agent de polymérisation étant un liquide.

4. Méthode selon une quelconque des revendications précédentes, comprenant (e) l'adjonction d'un deuxième composant d'agrégat dans l'enceinte pour former un mélange comprenant un premier composant d'agrégat, un deuxième composant d'agrégat (17), un composant de résine et un agent de polymérisation, le poids moyen du deuxième composant d'agrégat (17) étant inférieur à celui du premier composant d'agrégat (15).

5. Méthode selon une quelconque des revendications précédentes, la fréquence de vibration du premier mode de vibration étant comprise entre 20 et 45 Hz environ, p.ex. environ 20, 25, 30, 35, 40 ou 45 Hz, et, en option, la méthode comprenant l'application du premier mode de vibration pendant 1 à 10 minutes environ, p.ex. environ 1, 2, 3, 4, 5, 6, 7, 8, 9, ou 10 minutes, et de plus en option, la fréquence de vibration de l'autre mode de vibration étant supérieure à environ 25 Hz, p.ex. 30, 35, 40, 42, ou 45 Hz, et de plus en option, la méthode comprenant l'application de l'autre mode de vibration pendant 1 à 10 minutes environ, p.ex. environ 1, 2, 3, 4, 5, 6, 7, 8, 9, ou 10 minutes.

6. Méthode selon une quelconque des revendications précédentes, comprenant en outre l'étape de :
positionnement de l'enceinte (19) contenant le composant de résine et l'agent de polymérisation sous un conteneur d'agrégat (132) préalablement à l'étape (c), la méthode comprenant, en option, le chargement du conteneur d'agrégat avec le premier composant d'agrégat, et, en option, au moins un autre composant d'agrégat, la méthode comprenant en outre l'étape de :
réacheminement d'un mouvement de chute verticale du (des) composant(s) d'agrégat(s) du conteneur à travers au moins une couche maillée (148, 150) située entre le(s) composant(s) d'agrégat(s) introduits dans le conteneur d'agrégat et l'enceinte, et la méthode comprenant en outre l'étape de : déviation du (des) composant(s) d'agrégat(s) tombant dans une direction transversale relativement à une direction de chute verticale, par le biais de jambes de force d'une couche maillée inférieure présentant des ouvertures décalées par rapport aux ouvertures d'une couche maillée adjacente, et le conteneur d'agrégat comprenant en outre au moins une couche maillée.

7. Méthode selon la revendication 6, le conteneur d'agrégat (132) comprenant une région inférieure et une pluralité de panneaux parallèles allongés (146) dans la région inférieure, les panneaux parallèles allongés pouvant être tournés d'une position ouverte, dans laquelle des bords des panneaux sont espacés l'un de l'autre, à une position fermée, dans laquelle les bords de panneaux adjacents se chevauchent au moins partiellement, et, en option, le conteneur d'agrégat ayant été rempli avec le premier composant d'agrégat, et, en option, les autres composants, lorsque les panneaux se trouvent dans une position fermée, les panneaux étant, en option, tournés de la position fermée à la position ouverte pour dégager les composant(s) d'agrégat(s) du conteneur, et la méthode comprenant en outre, en option, l'étape de
réacheminement d'un mouvement de chute verticale de composant(s) d'agrégat(s) refoulés par le conteneur en localisant une région d'une surface supérieure entre le conteneur et l'enceinte dans la position ouverte.

8. Méthode selon la revendication 7, comprenant en outre l'étape suivante :
refoulement du composant d'agrégat de façon substantiellement simultanée dans une zone intégrale de la région inférieure du conteneur en faisant tourner les panneaux (146) en commun avec le même angle de rotation, la méthode comprenant en outre, en option :
application d'une composante transversale sur le mouvement de chute du composant d'agrégat par la déviation du composant d'agrégat avec ladite surface supérieure des panneaux, et la méthode comprenant en outre, en option, l'étape de
réacheminement d'un mouvement de chute verticale du composant d'agrégat refoulé par le conteneur par le biais d'au moins une couche maillée située entre les panneaux et l'enceinte.

9. Méthode selon la revendication 7 ou la revendication 8, comprenant en outre l'étape suivante :
déviation du composant d'agrégat tombant dans une direction transversale relativement à une direction verticale, par le biais de jambes de force présentant des ouvertures décalées par rapport aux ouvertures d'une couche maillée adjacente, la méthode comprenant, en option, l'application d'une couche de composant de résine activée sur une surface supérieure du mélange dans l'enceinte, le mélange comprenant le premier composant d'agrégat, le deuxième composant d'agrégat, le composant de résine et le composant d'agent de polymérisation.

10. Méthode selon une quelconque des revendications précédentes, comprenant en outre l'étape de :
polymérisation du mélange de composant d'agrégat, de résine, et d'agent de polymérisation dans le mélange de l'enceinte.

11. Méthode selon une quelconque des revendications précédentes, l'appareil étant sélectionné parmi les suivants : comptoir, plan de travail, bureau, panneau, panneau mural, bac de douche, pare-douche ou panneau de plancher.

12. Méthode selon une quelconque des revendications précédentes, le premier composant d'agrégat étant sélectionné parmi un des suivants : copeaux de verre, copeaux de pierre, copeaux de pierre agglomérés, coquilles, copeaux de matière plastique, copeaux de miroir et copeaux métalliques, et, en option, le deuxième composant d'agrégat étant sélectionné parmi les suivants :
copeaux de verre, copeaux de pierre, copeaux de pierre agglomérés, coquilles, copeaux de matière plastique, copeaux de miroir, copeaux métalliques, feuille d'or et copeaux de matériaux rares, p.ex. des copeaux de verre rare.
